# EUROPEAN PATENT APPLICATION

(11) **EP 2 605 133 A1**
(43) Date of publication of application: **19.06.2013**
(21) Application number: 11831938.3
(22) Date of filing: 17.01.2011
(51) Int. Cl.: G06F 9/445

(54) **SOFTWARE VERSION UPGRADING METHOD, TERMINAL AND SYSTEM**

(30) Priority: 11.10.2010 CN 201010511956
(71) Applicant: ZTE Corporation, Shenzhen, Guangdong 518057 (CN)
(72) Inventor: CAO, Yanfang, Guangdong 518057 (CN); YUAN, Jingmei, Guangdong 518057 (CN); ZHANG, Hui, Guangdong 518057 (CN)
(74) Representative: Ilgart, Jean-Christophe
(86) International application number: PCT/CN2011/070326
(87) International publication number: WO 2012/048541

(57) **Abstract**

The present invention discloses a method for upgrading a software version, which is applied to a mobile terminal, and the method comprises: a mobile terminal receiving a losslessly-compressed update file of a software version, and decompressing and restoring the update file; and the mobile terminal performing writing operation after the update file is decompressed and restored. The present invention further provides a mobile terminal and a system based on the method. Through the present solution, the update file of the software version of the mobile terminal is losslessly compressed by a lossless compression algorithm to solve the problems of very long downloading time and low downloading direct through rate in the related arts where the update file of the software version is directly downloaded and upgraded, therefore, the data transmission volume is reduced, the upgrade time of the mobile terminal is effectively reduced, and the mobile terminal can complete the upgrade process fast and securely, thus the upgrading and downloading efficiency is improved.

## Description

### Field of the Invention

The present invention relates to the communication field, in particular to a method, a terminal and a system for upgrading a software version.

### Background of the Invention

With the rapid development of the mobile communication industry, various multimedia services of the mobile terminal product become more and more powerful, which makes the internal software version larger and larger. For a mobile terminal, its software version is upgraded very frequently in the stages of production, post-sale and use. When facing a large software version during frequent upgrading, if the conventional upgrading mode is adopted, undoubtedly, the upgrading time will be very long and the efficiency will be low.

The conventional upgrading mode is to send, without any change, all the data in a terminal software version file to a terminal through a certain protocol to achieve the purpose of upgrading. In such way, the downloading time is directly proportional to the size of the version file. As to the current large software version, not only the downloading time is very long but also the downloading direct through rate is correspondingly decreased.

If the conventional mode is adopted for download, firstly, a device manufacturer will be subject to lower production efficiency, higher cost, longer product production cycle and smaller profit margin due to the very long time for downloading and upgrading; and secondly, for the upgrade of a user, due to the very long downloading time, the downloading failure rate will be increased, which will seriously affect the user experience, thereby losing the clients. Therefore, the efficiency is very important to various downloading and upgrading methods in the current various standards (system).

### Summary of the Invention

In order to solve the problems of long downloading time and low downloading direct through rate during the software upgrading in the related arts, the present invention provides a method, a terminal and a system for upgrading a software version to solve at least one of the above problems.

According to one aspect of the present invention, a method for upgrading a software version is provided, which is applied to a mobile terminal, the method comprises: a mobile terminal receiving a losslessly-compressed update file of a software version, and decompressing and restoring the update file; and the mobile terminal performing writing operation after the update file is decompressed and restored.

Before the mobile terminal receiving the losslessly-compressed file, the method further comprises: losslessly compressing and saving the update files one by one; and determining that all the updates files have been losslessly compressed.

Before losslessly compressing and saving the update files one by one, the method further comprises: judging whether each update file of the software version needs to be losslessly compressed.

Before the mobile terminal decompressing and restoring the update file, the method further comprises: the mobile terminal judging whether the received update file needs to be decompressed and restored.

After the mobile terminal judging whether the received update file needs to be decompressed and restored, the method further comprises: the mobile terminal directly writing the update file which does not need to be decompressed and restored.

The update file of the software version is losslessly compressed by the following algorithm: Run-Length Encoding (RLE) lossless compression algorithm.

According to another aspect of the present invention, a mobile terminal is provided, which comprises: a receiving module, which is configured to receive a losslessly-compressed update file of a software version; a decompression module, which is configured to decompress and restore the losslessly-compressed update file; and a writing module, which is configured to write the update file decompressed by the decompression module.

According to yet another aspect of the present invention, a system for updating a software version is provided, which comprises: a lossless compression device and the mobile terminal, wherein, the lossless compression device is configured to losslessly compress an update file of a software version and send the losslessly-compressed update file to the mobile terminal.

The lossless compression device comprises: a compression module, which is configured to losslessly compress and save the update files one by one and determine that all the update files have been losslessly compressed; and a sending module, which is configured to send the losslessly-compressed update file to the mobile terminal.

The lossless compression device further comprises: a first judging module, which is configured to judge whether each update file of the software version needs to be losslessly compressed.

The mobile terminal further comprises: a second judging module, which is configured to judge whether the received update file needs to be decompressed and restored.

The lossless compression device is configured to losslessly compress the update file of the software version by the RLE lossless compression algorithm.

Through the present invention, the update file of the software version of the mobile terminal is losslessly compressed by the lossless compression algorithm to solve the problems of very long downloading time and low downloading direct through rate in the related arts where the update file of the software version is directly downloaded and upgraded, therefore, the data transmission volume is reduced, the upgrade time of the mobile terminal is effectively reduced, and the mobile terminal can complete the upgrade process fast and securely, thus the upgrading and downloading efficiency is improved.

Other features and advantages of the present invention will be described in the following specification and partially become obvious from the specification, or be understood by implementing the present invention. The objectives and other advantages of the present invention can be realized and obtained by the specified structures in the written specification, claims and drawings.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a flowchart of a method for upgrading a software version according to one embodiment of the present invention;
Fig. 2 is a flowchart of a method for upgrading a software version according to one preferred embodiment of the present invention;
Fig. 3 is a diagram showing an example of lossless compression using an RLE lossless compression algorithm;
Fig. 4 is a block diagram showing the structure of a mobile terminal according to one embodiment of the present invention;
Fig. 5 is a block diagram showing the structure of a system for upgrading a software version according to one embodiment of the present invention; and
Fig. 6 is a block diagram showing the structure of a system for upgrading a software version according to one preferred embodiment of the present invention.

### Detailed Description of the Embodiments

The present invention will be described hereinafter in detail with reference to the drawings and in conjunction with the embodiments. It should be noted that the embodiments of the present invention and features thereof can be combined with each other if there is no conflict.

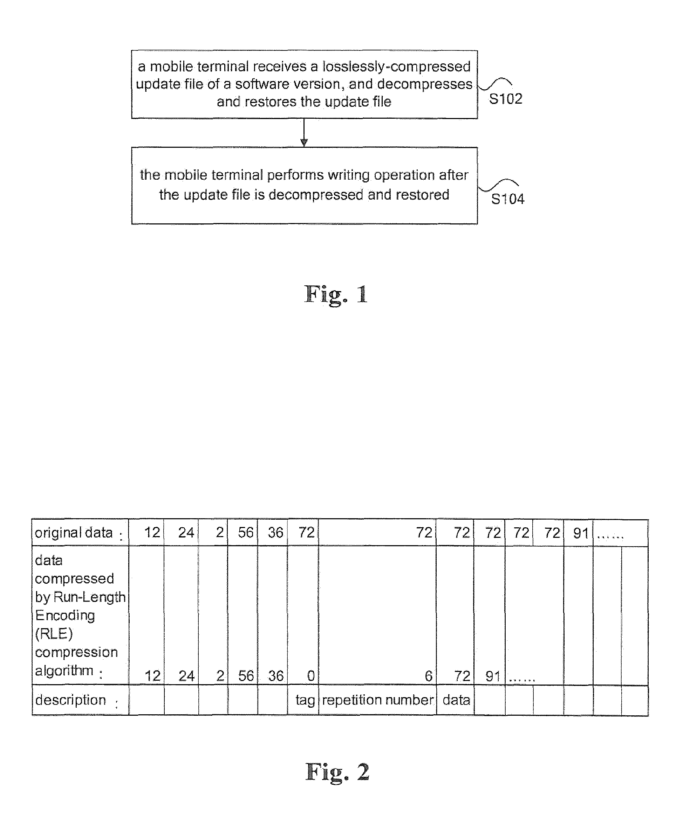

Fig. 1 is a flowchart of a method for upgrading a software version according to one embodiment of the present invention. The method can be applied to a mobile terminal, and as shown in Fig. 1, the method for upgrading the software version comprises:
S102: a mobile terminal receiving a losslessly-compressed update file of a software version, and decompressing and restoring the update file.
S104: the mobile terminal performing writing operation after the update file is decompressed and restored.

In the related art, the update file of the software version is directly downloaded to perform upgraded, which makes the downloading time very long and the downloading direct through rate low. While using the method provided by the embodiment, the update file of the software version of the mobile terminal is losslessly compressed, and then decompressed and restored by the terminal, which reduces the data transmission volume, therefore, the upgrade time of the mobile terminal is effectively reduced and the downloading direct through rate is improved, and the mobile terminal completes the upgrade process fast and securely, thus the upgrading and downloading efficiency is improved.

In a preferred implementation process, the losslessly-compressed update file of the software version received by the mobile terminal is from a lossless compression device, such as a computer.

Preferably, before S102, the method may further comprise the following processes of:
(1) the lossless compression device losslessly compressing and saving the update files one by one; and
(2) the lossless compression device determining that all the update files have been losslessly compressed.

In a preferred implementation process, before the update files are losslessly compressed and saved one by one, the method may further comprise: the mobile terminal judging whether the received update file needs to be decompressed and restored. Correspondingly, before decompressing and restoring the update file, the mobile terminal judges whether the received update file needs to be decompressed and restored, and after judging whether the received update file needs to be decompressed and restored, the mobile terminal directly writes the update file which does not need to be decompressed and restored in.

That is to say, as to the multiple update files of software versions, the lossless compression device needs to traverse each update file to judge whether each update file needs to be compressed. Generally, the determination scheme is as follows: a threshold is preset, and it is determined that a update file needs to be compressed when it is greater than the threshold and the update file does not need to be compressed when it is less than or equal to the threshold. When it is determined that an update file needs to be compressed, the file is compressed and saved. Each update file is sequentially judged till all the files are traversed.

In a preferred implementation process of the embodiment, the update file of the software version can be losslessly compressed by the following algorithm: Run-Length Encoding (RLE) lossless compression algorithm.

In the implementation process, in consideration of the limited memory space and computing performance of the mobile terminal, it is very important to adopt some compression algorithms which are very simple and secure and have a very high compression ratio with respect to the features of the current version file (such as the RLE lossless compression algorithm).

The RLE lossless compression algorithm has a very high compression ratio, and the size of the update file compressed by it is reduced obviously, therefore, the data transmission volume is reduced, the upgrade time of the mobile terminal is effectively reduced and the downloading through rate is improved, and the mobile terminal can complete the upgrade process fast and securely, thus the upgrading and downloading efficiency is improved. An example of lossless compression using the RLE lossless compression algorithm is described hereinafter in conjunction with Fig. 2.

Fig. 2 is a diagram showing an example of lossless compression using an RLE lossless compression algorithm. As shown in Fig. 2, the repetitive bytes in the original data are encoded, and the non-repetitive bytes are not processed. If there are 6 numbers (i.e. 72), which are sequential, in the original data, then the original data is compressed with 0 as a tag, wherein the data behind the tag 0 represents the number of repetition which is 6 herein, and the data 72 itself is right behind the data representing the number of the repetition 6. The tag value of the RLE algorithm must be the data most rarely occurring in input stream data, and most preferably the data not occurring in the input stream at all.

In the abovementioned implementation process, a version file is compressed by the RLE lossless compression algorithm, which is relatively simple and stable, has a very high compression rate, and can reduce the version file by about 40% in total and relatively increase the downloading and upgrading efficiency by more than 30%, excluding the decompression time of the mobile terminal, thereby saving time and reducing cost for the batch upgrade of the production of a production line and gaining more profits for the device manufacturer.

Of course, in a specific implementation process, other lossless compression algorithms may be also available for the compression, such as a Huffman algorithm or a Lempel-Ziv-Welch (LZW) algorithm.

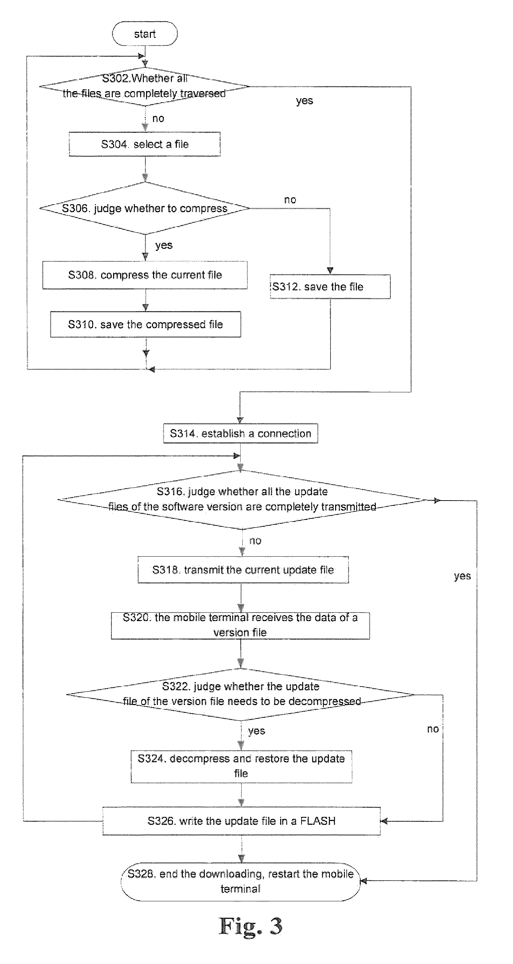

The abovementioned preferred embodiment is described hereinafter in conjunction with Fig. 3 in detail.

Fig. 3 is a flowchart of a method for upgrading a software version according to one preferred embodiment of the present invention. As shown in Fig. 3, the method for upgrading the software version comprises:
S302: each upgrade file in the software version file is sequentially traversed, step S314 is executed to establish a connection if the files are completely traversed, wherein the connection can be a (Universal Serial Bus) USB serial connection.

If the files are completely traversed, step S304 is executed to select one of the update files, then step S306 is executed to judge whether the selected update file needs to be compressed;
if it needs to be compressed, step S308 is executed to losslessly compress the update file by the RLE compression algorithm; then step S306 is executed to save the compressed file, and then S302 is re-executed to judge whether the files are completely traversed till all the update files of the software version are completely traversed; and
if it does not need to be compressed, step S314 is executed to directly save the upgrade file, then step S302 is re-executed to judge whether the files are completely traversed till all the update files of the software version are completely traversed; and then the compression process of the update files of the software version is finished.

In a preferred implementation process, a preset condition is adopted to judge and analyze whether the current file needs to be compressed in step S306, for example, the preset condition may be: setting a file size threshold wherein when the size of one file of the upgrade files is less than the threshold, it does not need to be compressed, otherwise, it needs to compressed.

Therefore, the time wasted for compressing and decompressing a small update file in the version file is avoided. It should be understood that the preset condition for determining whether to perform compression is not limited to the file size, and it may also be other limiting conditions, such as the file type.

Starting from step S314, a connection with the mobile terminal (the connection may be a USB serial connection) is established, and prepared for data transmission. If the connection is successful, step S316 is executed to judge whether all the update files in the version file are completely transmitted, if yes, step S328 is executed, the downloading process is ended and the mobile terminal is restarted, otherwise, step S318 is executed to continue the data transmission to transmit the current update files.

Step S320 is executed by the mobile terminal to receive the data of a version file, then step S322 is executed to judge whether the update file of the version file needs to be decompressed, if not, step S314 is executed to directly perform writing operation to write the update file into a FLASH, otherwise, step S324 is executed to decompress and restore the update file, and then step S326 is execute to perform writing operation to write the update file into the FLASH.

Then, step S316 is executed to process a next version file to judge whether a next update file in the software version file is completely transmitted till all the files are completely transmitted. Then step S328 is executed to complete the downloading process and restart the mobile terminal.

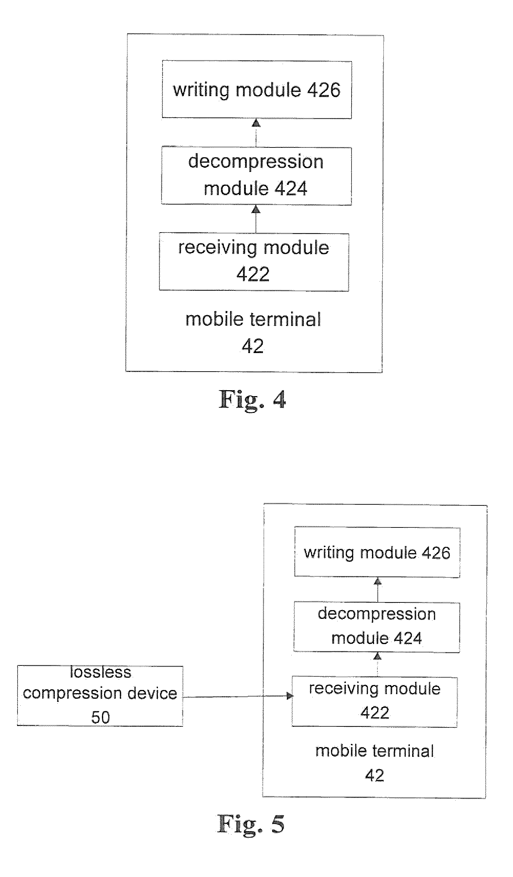

Fig. 4 is a block diagram showing the structure of a mobile terminal according to one embodiment of the present invention. As shown in Fig. 4, the mobile terminal 42 comprises:
a receiving module 422, which is configured to receive the losslessly-compressed update file from the lossless compression device 40;
a decompression module 424, which is configured to decompress and restore the update file; and
a writing module 426, which is configured to write the update file decompressed by the decompression module 424.

Fig. 5 is a block diagram of a system for upgrading a software version according to one embodiment of the disclosure. As shown in Fig. 5, the system comprises: a lossless compression device 50 and the mobile terminal 42, wherein
the lossless compression device 50 is configured to losslessly compress the update file of the software version; and
in a preferred implementation process, the mobile terminal 42 further comprises:
a receiving module 422, which is configured to receive the losslessly-compressed update file from the lossless compression device 40;
a decompression module 424, which is configured to decompress and restore the update file; and
a writing module 426, which is configured to write the update file decompressed by the decompression module 424.

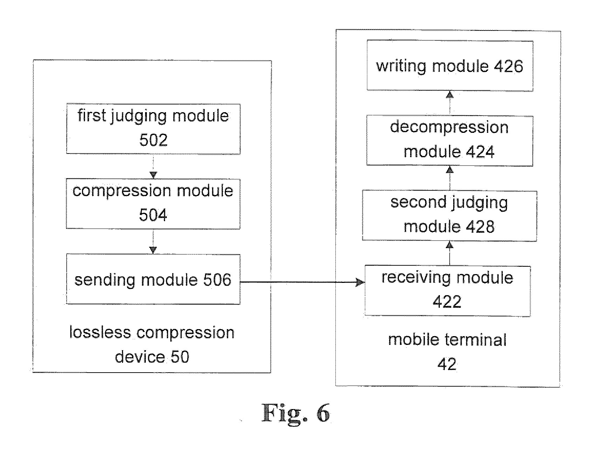

Preferably, with reference to Fig. 6, the lossless compression device 50 may further comprise:
a compression module 54, which is configured to losslessly compress and save the update files one by one and determine that all the update files have been losslessly compressed; and
a sending module 506, which is configured to send the losslessly-compressed update files to the mobile terminal 42.

In a preferred implementation process, as shown in Fig. 5, the lossless compression device 50 may further comprise: a first judging module 502, which is configured to judge whether each update file of the software version needs to be losslessly compressed, wherein a update file is compressed and saved by the compression module 504 if it needs to be compressed, and it is directly saved by the compression module 504 if it does not need to be compressed.. Correspondingly, the mobile terminal 42 may further comprise: a second judging module 428, which is configured to judge whether the received update file needs to be decompressed and restored. If the first judging module 502 determines that the update file needs to be compressed and the update file has been losslessly compressed by the compression module 504, the update file needs to be decompressed at first, and then be written, and if the first judging module 502 determines that the update file does not need to compressed, the update file is directly written.

In the preferred implementation process of the system embodiments, the lossless compression device 50 losslessly compresses the update file of the software version by the RLE lossless compression algorithm. Why adopting the RLE lossless compression algorithm has been explained in the method embodiments, thereby needing no further description here.

In the preferred implementation process of the system embodiments, the lossless compression device may be a computer or other information processing devices. The two major components: the lossless compression device 50 (such as a computer) and the mobile terminal 42, of the system may be communicated through a device communication interface (such as a USB interface); and the lossless compression device 50 sends the data of the version file to the mobile terminal 42 through the interface so as to download the version file.

It should be noted that the preferred working mode of the combination of the device, terminal and each module in the system is specifically shown in the description of the method embodiments in Fig. 1 and Fig. 2, thereby needing no further description.

In summary, in the embodiments, the upgrading and downloading efficiency are improved by effectively compressing the data of the software version file by the embedded lossless compression algorithm, therefore, the problem in the related art of wasted manpower and time caused by low upgrading efficiency in the production and sale links is solved, thus more profits are gained for the device manufacturer, and the post-sale maintenance cost of the terminal product can be greatly saved at the same time, furthermore, the satisfaction degree of the user experience is greatly increased in the upgrade process of the user, which can gain more customers for the terminal product.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiments of the present invention, which are not used to restrict the present invention. For those skilled in the art, the present invention may have various changes and variations. Any amendments, equivalent substitutions, improvements, etc. within the spirit and principle of the present invention are all included in the scope of the protection of the present invention.

## Claims

1. A method for upgrading a software version which is applied to a mobile terminal, **characterized in that** the method comprises:
a mobile terminal receiving a losslessly-compressed update file of a software version, and decompressing and restoring the update file; and
the mobile terminal performing writing operation after the update file is decompressed and restored.

2. The method according to claim 1, **characterized in that**, before the mobile terminal receiving the losslessly-compressed file, the method further comprises:
losslessly compressing and saving the update files one by one; and
determining that all the update files have been losslessly compressed.

3. The method according to claim 2, **characterized in that**, before compressing and saving the update files one by one, the method further comprises:
judging whether each update file of the software version needs to be losslessly compressed.

4. The method according to claim 3, **characterized in that**, before the mobile terminal decompressing and restoring the update file, the method further comprises:
the mobile terminal judging whether the received update file needs to be decompressed and restored.

5. The method according to claim 4, **characterized in that**, after the mobile terminal judging whether the received update file needs to be decompressed and restored, the method further comprises:
the mobile terminal directly writing the update file which does not need to be decompressed and restored.

6. The method according to any one of claims 1 to 5, **characterized in that** the update file of the software version is losslessly compressed by the following algorithm: Run-Length Encoding (RLE) lossless compression algorithm.

7. A mobile terminal, **characterized in that** the terminal comprises:
a receiving module, configured to receive a losslessly-compressed update file of a software version;
a decompression module, configured to decompress and restore the losslessly-compressed update file, and
a writing module, configured to write the update file decompressed and restored by the decompression module.

8. A system for upgrading a software version, **characterized in that** the system comprises:
a lossless compression device and the mobile terminal according to claim 7, wherein
the lossless compression device is configured to losslessly compress an update file of a software version and send the losslessly-compressed update file to the mobile terminal.

9. The system according to claim 8, **characterized in that** the lossless compression device comprises:
a compression module, configured to losslessly compress and save the update files one by one and determine that all the update files have been losslessly compressed; and
a sending module, configured to send the losslessly-compressed update file to the mobile terminal.

10. The system according to claim 9, **characterized in that**
the lossless compression device further comprises:
a first judging module, configured to judge whether each update file of the software version needs to be losslessly compressed; and
the mobile terminal further comprises:
a second judging module, configured to judge whether the received update file needs to be decompressed and restored.

11. The system according to any one of claims 8 to 10, **characterized in that** the lossless compression device is configured to losslessly compress the update file of the software version by RLE lossless compression algorithm.
